## Europäisches Patentamt

## European Patent Office

## Office européen des brevets

(19)

(11) Veröffentlichungsnummer: **0 085 422**
**B1**

(12) # EUROPÄISCHE PATENTSCHRIFT

(45) Veröffentlichungstag der Patentschrift:
06.08.86

(51) Int. Cl.⁴: **G 08 G 1/09**

(21) Anmeldenummer: **83100881.8**

(22) Anmeldetag: **31.01.83**

(54) **Verkehrsleit- und Informationssystem.**

(30) Priorität: **02.02.82 DE 3203357**

(43) Veröffentlichungstag der Anmeldung:
**10.08.83 Patentblatt 83/32**

(45) Bekanntmachung des Hinweises auf die Patenterteilung:
**06.08.86 Patentblatt 86/32**

(84) Benannte Vertragsstaaten:
**AT BE CH DE FR GB IT LI NL SE**

(56) Entgegenhaltungen:
**EP - A - 0 021 060**
**DE - A - 2 512 976**
**US - A - 3 985 195**

**NEC RESEARCH DEVELOPMENT, Nr. 52, Januar 1979,
Seiten 1-10, T. MIKAMI et al.: "Comprehensive
automobile control system - A new urban traffic control
trial"**

(73) Patentinhaber: **Siemens Aktiengesellschaft Berlin und
München, Wittelsbacherplatz 2, D-8000 München 2 (DE)**

(72) Erfinder: **von Tomkewitsch, Romuald, Dipl.-Ing.,
Winklweg 8, D-8026 Ebenhausen (DE)**
Erfinder: **Kappeller, Reinhard, Geigenbergerstrasse 27,
D-8000 München 71 (DE)**

## Beschreibung

Die Erfindung bezieht sich auf ein Verkehrsleit- und Informationssystem mit an bestimmten Stellen eines Verkehrsnetzes ortsfest angeordneten Leitbaken, von denen aus an passierende Fahrzeuge unter anderem ortsbezogene Informationen über Verkehrsvorschriften zusammen mit einer jeweils zugehörigen Ortskennzeichnung übermittelt werden, wobei in einzelnen Fahrzeugen jeweils ein Informationsspeicher zur Speicherung übermittelbar ortsbezogener Informationen und Verkehrsvorschriften zusammen mit der zugehörigen Ortskennzeichnung, eine selbständige Navigationseinrichtung zur ständigen Positionsermittlung des Fahrzeugs, eine Vergleichseinrichtung zum Vergleich der gespeicherten Ortskennzeichnungen mit der jeweils ermittelten Fahrzeugposition sowie eine Anzeigeeinrichtung zur ortsgerechten Anzeige von gespeicherten Informationen über Verkehrsvorschriften bei Übereinstimmung der zugehörigen Ortskennzeichnung mit der jeweils ermittelten Fahrzeugposition vorgesehen sind.

Ein derartiges System ist bereits in der EP-A-0 021 060 beschrieben. Danach werden Weginformationen in Form von Leitvektoren von Leitbaken an das jeweilige Fahrzeug übertragen, dort gespeichert und ortsgerecht angezeigt. Bei diesem bekannten System ist auch bereits vorgesehen, wichtige Verkehrszeichen mit ihrer Ortskennzeichnung in das Fahrzeug zu übertragen und dort anzuzeigen, solange sich das Fahrzeug in Strassenabschnitten bewegt, in denen diese Verkehrszeichen gelten. Dieses bekannte System hat den Vorteil, dass der Fahrzeugführer auf Gebote oder Verbote hingewiesen wird, auch wenn er die entsprechenden Schilder am Strassenrand übersieht oder vor ihrer Aufhebung am Ende des Gültigkeitsbereiches vergisst. Nachteilig ist dabei jedoch, dass durch die zusätzlich ständig angezeigten Vorschriftensymbole im Fahrzeug eine Reizüberflutung entsteht, die für den korrekt fahrenden Fahrzeugführer eine unnötige optische Belastung darstellt.

Die US-A-3 985 195 beschreibt ein System zur Geschwindigkeitsbegrenzung in einem Fahrzeug, bei dem eine vorgeschriebene Höchstgeschwindigkeit in dem Fahrzeug gespeichert und mit der gemessenen tatsächlichen Geschwindigkeit verglichen wird. Bei Abweichungen kann ein Warnsignal erzeugt werden; ausserdem ist dort vorgesehen, durch automatischen Eingriff in die Geschwindigkeitssteuerung eine Geschwindigkeitskorrektur herbeizuführen. Bei diesem bekannten System geht es also lediglich darum, einen einfachen Vergleich zwischen der gegenwärtig gefahrenen Geschwindigkeit und der vorgeschriebenen Geschwindigkeit durchzuführen, um eine Übertretung der Vorschrift festzustellen und daraus Folgerungen zu ziehen. Dies ist für den Fall einer vorgeschriebenen Höchstgeschwindigkeit verhältnismässig einfach durchzuführen, da jedes Fahrzeug ohnehin mit einem Geschwindigkeitsmesser ausgestattet ist. Für die Kontrolle des sonstigen Fahrverhaltens ist dieses System jedoch nicht anwendbar.

Aus der DE-A-25 12 976 sind schliesslich ein Verfahren und eine Einrichtung zur Registrierung von Übertretungen von Verkehrsvorschriften bekannt, wobei jeweils in dem Fahrzeug eine Registriereinrichtung vorgesehen ist, die durch einen festen Sender von aussen eingeschaltet wird. Damit können vollendete Verkehrsverstösse registriert werden; es ist aber nicht daran gedacht, den Fahrzeugführer dann zu warnen, wenn er sich zu einem vorschriftswidrigen Verhalten anschickt.

Aufgabe der Erfindung ist es, das eingangs genannte System so weiterzubilden, dass der Fahrzeugführer bei einem nicht verkehrsgerechten Verhalten gewarnt und an die jeweilige Vorschrift erinnert wird, ohne dass er durch ständige Anzeige aller geltenden Vorschriften einer überflüssigen Reizüberflutung unterliegt.

Erfindungsgemäss wird diese Aufgabe dadurch gelöst, dass in dem Fahrzeug ein Vorschriftenspeicher für ortsgebundenes vorschriftsmässiges Verkehrsverhalten vorgesehen ist, dass Sensoren zur Erfassung vorbereitender Handlungen im Fahrzeug für ein bevorstehendes Verkehrsverhalten und zur Erzeugung von entsprechenden Signalen vorgesehen sind, dass die ortsgebundenen Informationen aus dem Vorschriftenspeicher in einer Vergleichseinrichtung mit den Signalen der Sensoren verglichen werden, und dass bei Feststellung von Sensorsignalen, die einer bestimmten Vorschrift aus dem Vorschriftenspeicher widersprechen, ein Symbol für die betreffende Vorschrift angezeigt wird.

Beim erfindungsgemässen System werden also nicht ständig alle Verkehrszeichen im Fahrzeug angezeigt, welche entlang der Route gelten. Vielmehr wird nur dann ein bestimmtes Warnsignal erzeugt, wenn der Fahrer sich anschickt, durch vorbereitende Handlungen ein unzulässiges Fahrmanöver einzuleiten, beispielsweise durch Setzen des Blinkgebers einen Überhol- oder Abbiegevorgang einzuleiten oder durch Ausschalten der Zündung an unzulässiger Stelle zu parken. Der Fahrer wird also weniger abgelenkt, solange er sich vorschriftsmässig verhält, und das Warnsignal erregt um so eher seine Aufmerksamkeit, wenn er eine Vorschrift nicht frühzeitig beachtet. Die Vorschriften selbst werden dabei wie die sonstigen Leitinformationen jeweils vom Leitbaken zum Fahrzeug übertragen und dort gespeichert. Jede Vorschrift trägt dabei auch ihre zugehörige Ortskennzeichnung für den örtlichen Bereich ihrer Gültigkeit. Diese Ortskennzeichnung wird in der Vergleichseinrichtung jeweils mit der ermittelten Fahrzeugposition verglichen. Diejenigen Vorschriften, deren Ortskennzeichnung mit der gerade ermittelten Fahrzeugposition übereinstimmt, werden dann mit Messwerten, die das Fahrverhalten wiedergeben, verknüpft und gegebenenfalls zur Abgabe eines Warnsignals ausgewertet.

Soweit auch zeitgebundene Vorschriften, wie beispielsweise nur zu bestimmten Tageszeiten

geltende Parkverbote, im Vorschriftsspeicher enthalten sind, ist es zweckmässig, dass im Fahrzeug ein Zeitgeber vorgesehen ist, so dass die zusammen mit der jeweiligen Vorschrift gespeicherte Geltungszeit mit der aktuellen Tageszeit verglichen werden kann, und dass ein Abweichen von dieser Vorschrift nur während der Geltungszeit zu einem Warnsignal führt. Bei derartigen zeitabhängigen Vorschriften wäre es aber auch möglich, bereits bei der Übertragung zum Fahrzeug einen Zeitvergleich durchzuführen und diese Vorschriften nur während ihrer Geltungszeit an das Fahrzeug zu übertragen. In diesem Fall ist es zweckmässig, in der sendenden Leitbake eine Uhr vorzusehen.

Als Warnsignal dient zweckmässigerweise eine optische Anzeige. Zu diesem Zweck kann im Fahrzeug ein Anzeigefeld mit einer Vielzahl getrennt ansteuerbarer Leuchtfelder vorgesehen sein, auf welchem durch entsprechende Kombination bestimmter Leuchtfelder bestimmte Warnsymbole erzeugt werden können. Dieses Leuchtfeld für Warnsymbole kann gleichzeitig mit einer Anzeigeeinrichtung für Leitempfehlungen kombiniert sein.

Die Erfindung wird nachfolgend an Ausführungsbeispielen anhand der Zeichnung näher erläutert. Es zeigt

Fig. 1 ein optisches Anzeigefeld zur Anzeige von Warnsymbolen,

Fig. 2a bis 2 h einzelne Warnsymbole, die im Anzeigefeld von Fig. 1 erzeugbar sind,

Fig. 3 eine Fahrtroute in einem Stadtgebiet mit einer Anzahl entlang der Route geltender Verkehrszeichen,

Fig. 4 eine tabellarische Zusammenstellung der Informationen, die zur Berücksichtigung der Verkehrsvorschriften entlang der Route von Fig. 3 an das Fahrzeug übertragen werden,

Fig. 5 ein Blockschaltbild für die im Fahrzeug und in einer an der Route angeordneten Leitbake notwendigen Einrichtungen,

Fig. 6 eine detaillierte Darstellung der Fahrzeugeinrichtungen und ihrer funktionellen Verknüpfung.

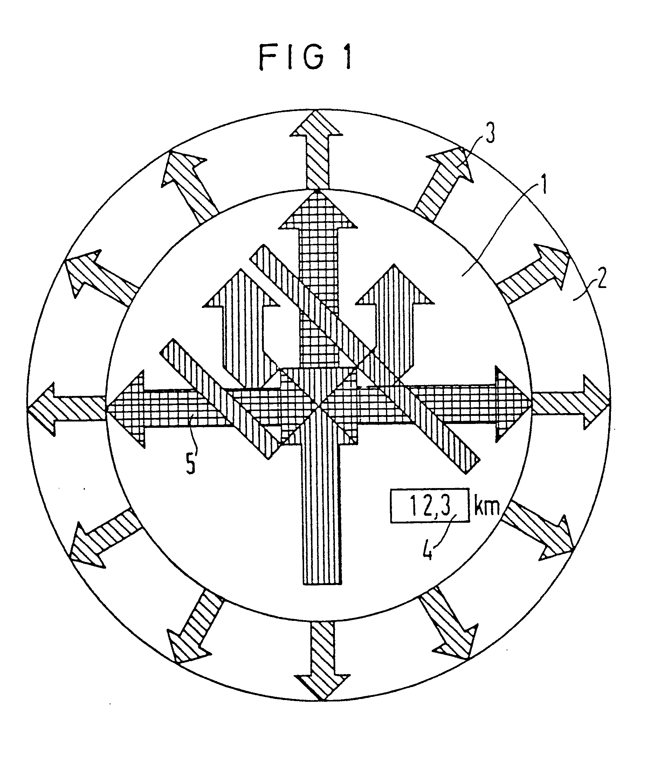

In Fig. 1 ist ein optisches Anzeigefeld dargestellt, das nach Art eines Rundinstruments kreisförmig gestaltet ist und in einem inneren kreisförmigen Feld 1 verschiedene Warnsymbole zeigt, während das ringförmige Aussenfeld 2 zur Darstellung von Richtungspfeilen 3 für die Leitweglenkung dient. Eine alphanumerische Anzeige 4 kann dabei die Entfernung zu einem Ziel oder zum nächsten Leitpunkt bedeuten, was in der DE-OS 29 23 634 im einzelnen beschrieben ist.

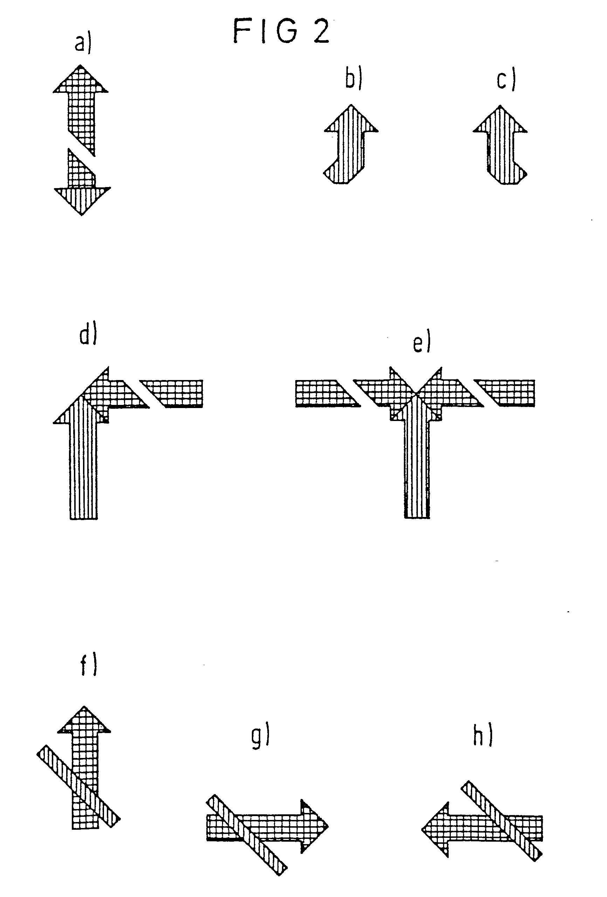

Im inneren Anzeigefeld 1 sind auf engem Raum Balken und Pfeile angeordnet, die beispielsweise von Flüssigkristallplatten 5 gebildet sind, welche in verschiedenen Farben ausleuchtbar sind. Die einzelnen Segmente dieser Anzeigeanordnung 5 sind getrennt ansteuerbar, so dass auf diese Weise die Symbole der Fig. 2a bis 2h erzeugt werden können.

Diese Symbole unterscheiden sich von den rechtsverbindlichen Verkehrszeichen und sind deshalb nur als zusätzliche, juristisch unverbindliche Hinweise zu verstehen. Es handelt sich bei diesen Symbolen auch nicht um die Wiedergabe von Vorschriften, sondern um Warnzeichen, die auf die Verletzung einer Vorschrift hinweisen sollen. Im einzelnen haben die Symbole von Fig. 2a bis 2h folgende Bedeutung:

Fig. 2a: «Geschwidigkeit vermindern!»
Fig. 2b: «Parken verboten!»
Fig. 2c: «Überholen verboten!»
Fig. 2d: «Vorfahrt von rechts!»
Fig. 2e: «Vorfahrt beachten!»
Fig. 2f: «Geradeausfahren verboten!»
Fig. 2g: «Rechts abbiegen verboten!»
Fig. 2h: «Links abbiegen verboten!»

Die Warnzeichen können in verschiedenen Farben gehalten sein, beispielsweise in Rot und Gelb. Weitere Warnzeichen können bei Bedarf vorgesehen werden.

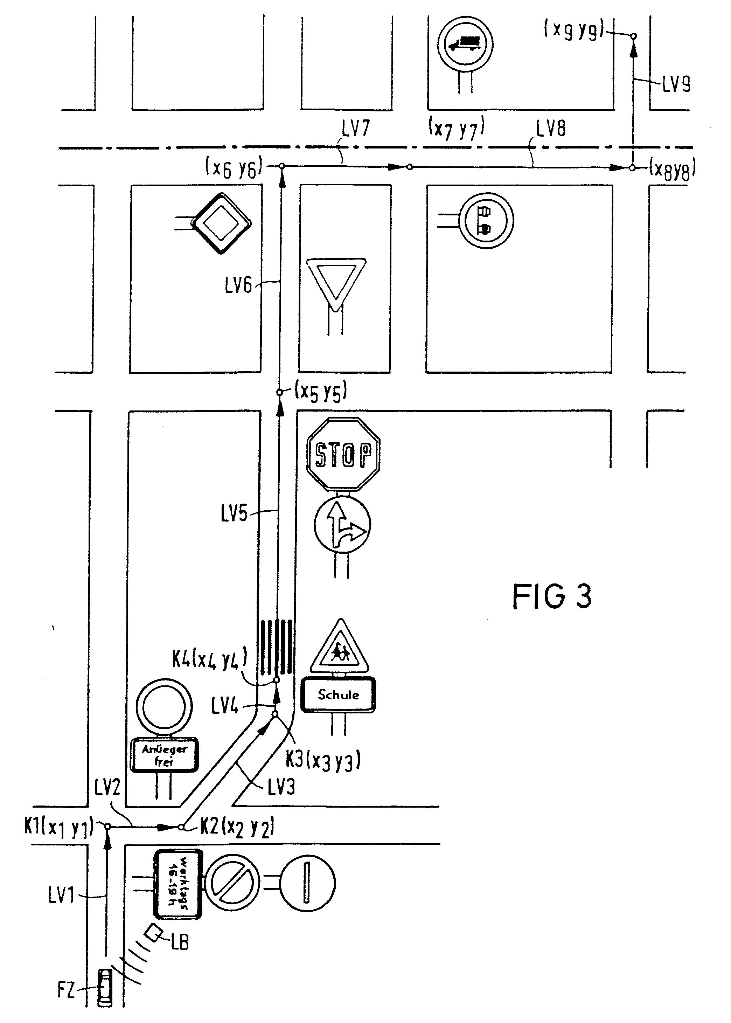

Fig. 3 zeigt ein Strassennetz mit Verkehrsschildern an einer durch die Leitvektoren LV1, LV2... LV9 beschriebenen Fahrtroute. Die Bedeutung der Leitvektoren ist im einzelnen in der DE-OS 29 23 634 beschrieben. So können beispielsweise von einer Leitbake LB Leitempfehlungen für den gesamten dargestellten Strassenzug in Form dieser Leitvektoren in die einzelnen Fahrzeuge übertragen und dort entsprechend dem Fahrtverlauf angezeigt werden. Jeder Leitvektor beschreibt jeweils den Weg bis zu einem Knotenpunkt K mit den Koordinaten x und y. So führt der Leitvektor LV1 zum Knotenpunkt K1 $(x_1, y_1)$, der Leitvektor LV 2 zum Knotenpunkt K 2 $(x_2, y_2)$ usw.

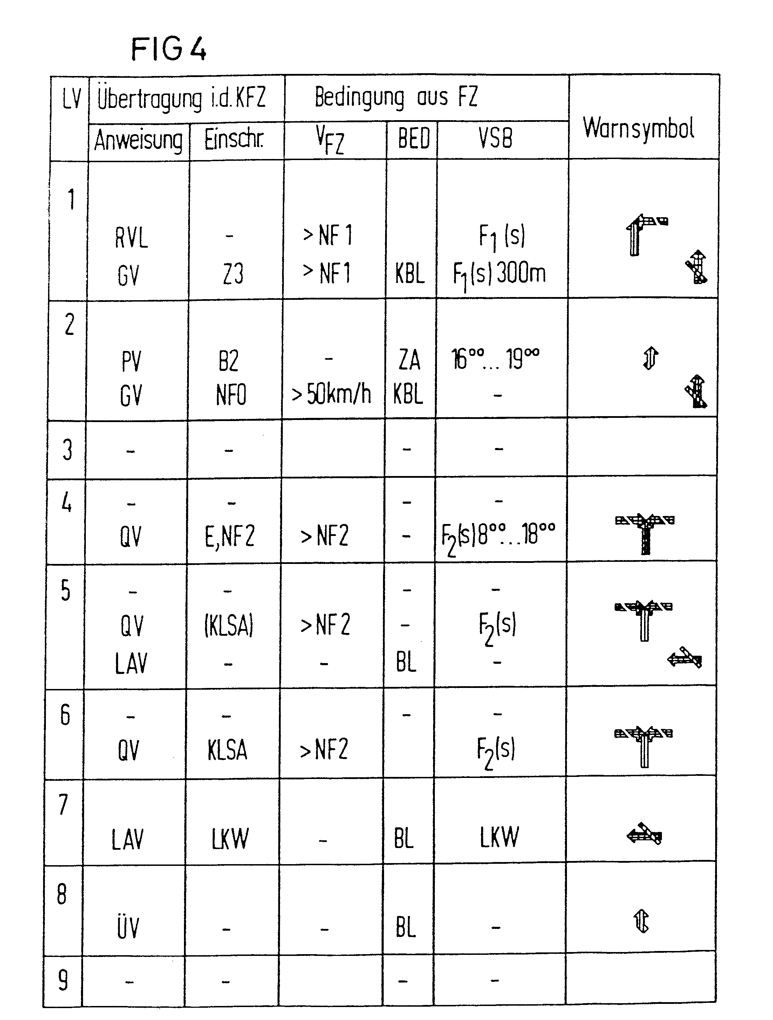

In Fig. 4 wird in tabellarischer Form beispielsweise gezeigt, welche Informationen in codierter Form in Verbindung mit jedem Leitvektor LV1 und LV9 von einer in Fig. 3 dargestellten Leitbake LB in ein vorbeifahrendes Fahrzeug FZ übertragen werden und welche im Fahrzeug erfassbaren Bedingungen erfüllt sein müssen, damit ein entsprechender Warnhinweis etwa mit den Symbolen nach den Fig. 2a bis 2h erfolgt.

In Fig. 4 sind in der linken Spalte LV untereinander die Nummern der einzelnen Leitvektoren eingetragen, deren Ortskennzeichnungen in das Fahrzeug übertragen und zur Ausgabe von Leitwegempfehlungen im Fahrzeug umgesetzt werden. In den beiden folgenden Spalten sind die zusätzlichen Informationen angegeben, die zusammen mit den einzelnen Leitvektoren in das Fahrzeug übertragen werden, um Warnhinweise entsprechend den Verkehrszeichen nach Fig. 3 zu erzeugen. In der Spalte «Anweisung» sind jeweils codiert die Vorschriften angegeben, die auf dem Streckenabschnitt gelten und ausgewertet werden sollen. In der Spalte «Einschränkung» werden ergänzende Informationen angegeben, die die vorher angegebenen Anweisungen gegebenenfalls modifizieren.

In den folgenden Spalten sind die Bedingungen aus dem Fahrzeug FZ aufgeführt, die mit den übertragenen und gespeicherten Vorschriften verglichen bzw. verknüpft werden, um daraus die Warnhinweise zu erzeugen. Es handelt sich dabei um die Geschwindigkeit $v_{FZ}$ des Fahrzeugs, um Unterbedingungen BED aus der Bedienung des Fahrzeugs und um Angaben, die als unveränderliche Grössen (Versorgungsbedingungen) dem Bordrechner eingespeichert werden. Diese Angaben sind unter der Spalte VSB eingetragen. In der letzten Spalte ist dann jeweils das Warnsymbol angegeben, das aus der Verknüpfung der vorstehenden Anweisungen und Bedingungen gegebenenfalls abgeleitet und im Fahrzeug angezeigt wird.

Die Verknüpfung der im Fahrzeug übertragenen Informationen mit den im Fahrzeug erfassten Bedingungen soll nun im folgenden am Beispiel der in Fig. 3 dargestellten Fahrtroute erläutert werden. Das dort dargestellte Strassennetz befindet sich in einer Stadt.

Im Beispiel von Fig. 3 nähert sich das Fahrzeug FZ dem Knotenpunkt K1 $(x_1, y_1)$, an dem die Regel «Rechts vor Links» gilt. Deshalb wird zusammen mit dem Leitvektor LV1 die Anweisung «RVL» übertragen und im Fahrzeug gespeichert. Jeder Fahrzeugführer muss die Geschwindigkeit seines Fahrzeugs verringern, um einem von rechts kommenden, anderen Fahrzeug die Vorfahrt überlassen zu können. Aus den üblichen Fahrbahnbreiten von Nebenstrassen, den daraus resultierenden Sichtverhältnissen sowie einem durchschnittlichen Reaktionsvermögen ergibt sich eine bestimmte, gerade noch vertretbare Näherungsfunktion $v = F(s)$. Im Fahrzeug sind verschiedene Näherungsfunktionen $F_1(s)$, $F_2(s)$ gespeichert. Wenn in der Spalte «Einschränkung» nichts eingetragen ist und dementsprechend keine Information übertragen wurde, wird beispielsweise im Fahrzeug der Anweisung RVL fest die Näherungsfunktion NF1 = $v = F_1(s)$ assoziiert. Mit Hilfe seiner Navigationseinrichtung kann der Bordrechner im Fahrzeug laufend den Abstand s aus seiner aktuellen Position und den Koordinaten $(x_1, y_1)$ des Knotenpunkts K1 berechnen und überprüfen, ob sich das Fahrzeug vorsichtiger und treibstoffsparender der Kreuzung nähert, als es die Näherungsfunktion $F_1(s)$ vorschreibt. Das wird normalerweise der Fall sein. Nur wenn $v_{FZ} > $ NF1 ist, erscheint der Warnhinweis «Vorfahrt von rechts» (Fig. 2d).

An Kreuzungen, die so unübersichtlich sind, dass eine weitere Herabsetzung der Geschwindigkeit über das normale Mass hinaus erforderlich ist, würde in Verbindung mit der Anweisung RVL zusätzlich die Einschränkung NF2 übertragen werden. In diesem Fall würde also die Fahrzeuggeschwindigkeit $v_{FZ}$ mit der Näherungsfunktion $F_2(s)$ verglichen werden. Bei völlig freien Kreuzungen, an denen eine Geschwindigkeitsverminderung nicht erforderlich ist, unterbleibt die Übertragung der Anweisung RVL.

Am Knotenpunkt K1 $(x_1, y_1)$ darf auch eine Fahrt in Richtung des Leitvektors LV1 nicht fortgesetzt werden. Die geradeaus weiterführende Strasse ist nur für Anlieger frei, wie sich aus dem Verkehrszeichen in Fig. 3 ergibt. Aus diesem Grunde wird zusammen mit dem Leitvektor LV1 auch noch die Anweisung «Geradeausfahrt verboten», codiert GV, in das Fahrzeug übertragen. Die Einschränkung «Für Anlieger frei» wir durch die zusätzliche Übermittlung des Codewortes «Z3» berücksichtigt. Das bedeutet: Ist das Reiseziel nicht weiter als 300 m vom Knotenpunkt K1 $(x_1, y_1)$ entfernt, so wird die Anweisung aufgehoben. Die Zielentfernung kann im Bordrechner aus den Zielkoordinaten, die zu Beginn der Fahrt in den Zielspeicher eingegeben wurden, und den Knotenpunktkoordinaten $x_1, y_1$ berechnet werden.

Für die jeweils vertretbare Annäherungsgeschwindigkeit gelten die bereits beschriebenen Gesetzmässigkeiten. Jeder Fahrer, der das Sperrschild erblickt, wird die Fahrzeuggeschwindigkeit herabsetzen und den Blinker betätigen. Unterlässt er eines von beiden, so wird er durch den Hinweis «Geradeausfahrt verboten» (Symbol Fig. 2f) gewarnt.

Sobald der Bordrechner mit Hilfe seiner Navigationsrichtung feststellt, dass sich das Fahrzeug im Bereich des Leitvektors LV2 bewegt, werden die Anweisungen dieses Streckenabschnittes berücksichtigt. Der Hinweis «Parkverbot», codiert PV, ist mit der Einschränkung «Berufsverkehr am Nachmittag», codiert B2, versehen. Unter dieser Codierung B2 ist beispielsweise im Fahrzeug die Zeit von 16 Uhr bis 19 Uhr abgespeichert. Ausserdem enthält das Fahrzeug einen Uhrenbaustein, der die aktuelle Tageszeit misst und für den Vergleich zur Verfügung stellt. Der Hinweis «Parken verboten» (Symbol Fig. 2b) erscheint also dann, wenn der Zündschlüssel des Fahrzeugs in der Zeit zwischen 16 Uhr und 19 Uhr im Bereich des Leitvektors LV2 abgezogen wird. Die entsprechende Bedingung ZA ist in der Spalte BED angegeben.

Bei Beibehaltung der Fahrtrichtung würde das Fahrzeug in eine Einbahnstrasse geraten. Wie im Bereich des Leitvektors LV1 wird deshalb die Anweisung «Geradeausfahrt verboten», codiert GV, mit der Einschränkung «Näherungsfunktion NFO» übertragen. Das bedeutet, dass eine Verminderung der Fahrzeuggeschwindigkeit nicht erforderlich ist, der Blinker jedoch betätigt werden muss. Stellt der Bordrechner keine Blinkerbetätigung fest, so erscheint das Symbol Fig. 2f. Die entsprechende Bedingung hierfür ist in der Spalte BED mit der Codierung KBL angegeben.

Die Anweisung QV im Bereich des Leitvektors LV4 bedeutet «Querverkehr hat Vorfahrt». Diese Anweisung bezieht sich im Beispiel von Fig. 3 auf den Fussgängerübergang im Bereich einer Schule. Die Einschränkung E bedeutet «Während des Einkaufverkehrs», womit die Zeit von 8 Uhr bis 18 Uhr gemeint und entsprechend abgespeichert ist. Die weitere Einschränkung NF1 weist darauf hin, dass verantwortungsbewusste Fahrer wegen der Unberechenbarkeit von Kindern die Näherungsfunktion $F_1(s)$ einhalten. Das Symbol Fig. 2b erscheint also nur, wenn sich das Fahrzeug in der Zeit zwischen 8 Uhr und 18 Uhr schneller dem Knotenpunkt K4 $(x_4, y_4)$ nähert, als es die Nähe-

rungsfunktion $F_1(s)$ verlangt.

Die Anweisung «Querverkehr hat Vorfahrt», codiert QV, im Bereich des Leitvektors LV5 wird mit der Einschränkung «Keine Lichtsignal-Signalisierung», codiert KLSA, ergänzt. Wenn nicht anders angegeben, wird die Anweisung QV vom Bordrechner in diesem Fall beispielsweise mit der vorsichtigeren Näherungsfunktion $F_2(s)$ verknüpft. Das Warnsymbol Fig. 2e erscheint also, wenn sich das Fahrzeug bei abgeschalteter Signalanlage schneller, als es die Näherungsfunktion $F_2(s)$ erlaubt, dem Knotenpunkt K5 $(x^5, y_5)$ nähert. Im selben Bereich gilt die Anweisung «Links abbiegen verboten», codiert LAV. Schaltet der Fahrer in diesem Bereich den linken Blinker ein, so erhält er einen Hinweis mit dem Warnsymbol Fig. 2h. Die entsprechende Bedingung BL ist wiederum in der Spalte BED eingetragen.

In dem durch den Leitvektor LV7 beschriebenen Strassenabschnitt gilt ein Linksabbiegeverbot für Lastkraftwagen. Nimmt man an, dass das Fahrzeug FZ im vorliegenden Beispiel ein Lastkraftwagen ist und entsprechend die Codierung «LKW» eingespeichert hat (siehe Spalte VSB), so wird im Bereich des Leitvektors LV7 bei Einschaltung des linken Blinkers das Symbol Fig. 2h angezeigt.

Im Bereich des Leitvektors LV8 gilt ein Überholverbot. Der Hinweis gemäss Fig. 2c erscheint dann, wenn der Fahrer den linken Blinker betätigt. Allerdings muss er in diesem Fall den linken Blinker deswegen betätigen, weil er entsprechend der Leitempfehlung (LV9) nach links abbiegen muss. Er darf sich also in diesem Fall durch den Hinweis «Überholen verboten» gemäss Fig. 2h nicht beirren lassen.

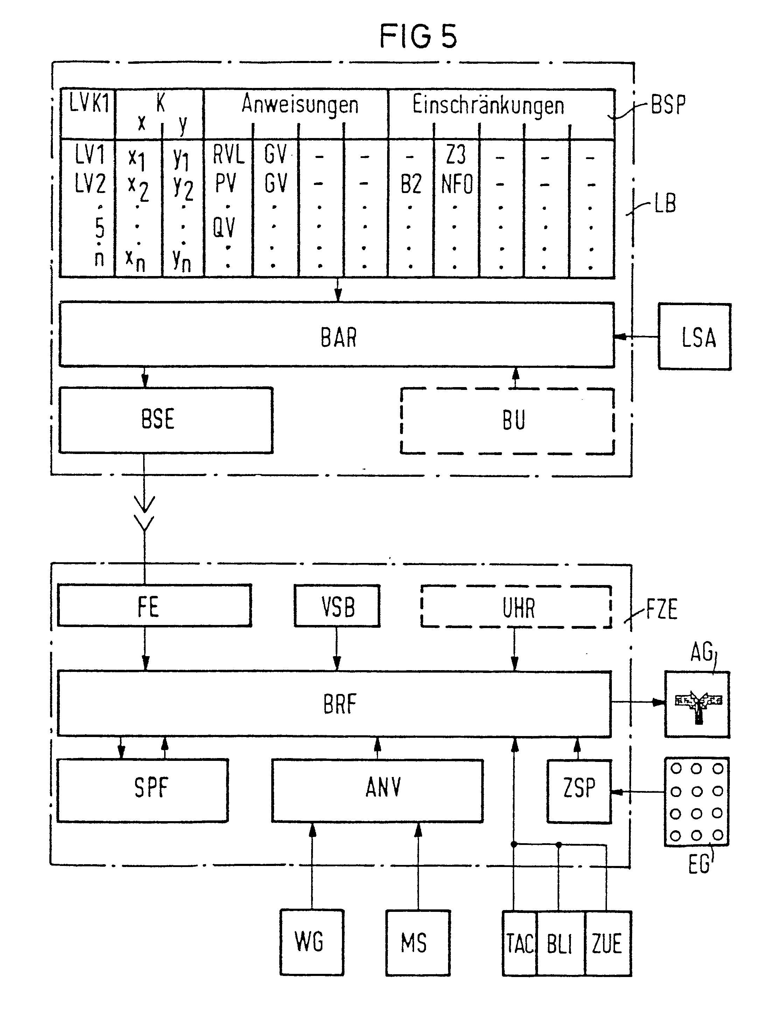

Fig. 5 zeigt in einem Blockschaltbild die für das Warnsystem erforderlichen Einrichtungen. Die Leitbake LB enthält einen Bakenspeicher BSP, in dem unter anderem alle Leitvektorketten, die die Fahrtroute zu benachbarten Baken beschreiben, abgespeichert sind. Alle diese Leitvektorketten werden an die vorüberfahrenden Fahrzeuge abgestrahlt. Das einzelne Fahrzeug wählt aber nur diejenige Leitvektorkette bzw. diejenigen Informationen aus, die es entsprechend seiner Zieleingabe braucht (siehe DE-OS 2 923 634).

In Fig. 5 ist lediglich die Leitvektorkette LVK1 angedeutet, die aus den Leitvektoren LV1 bis LVn besteht. Die Längen und Richtungen der Leitvektoren lassen sich aus den Koordinaten der zugehörigen Knotenpunkte K $(x,y)$ berechnen. Den Leitvektoren fest zugeordnet, sind die Anweisungen und Einschränkungen für das Warnsystem abgespeichert. Der Bakenrechner BAR fragt den Inhalt dieses Speichers (und alle weiteren in Fig. 5 nicht näher erläuterten Informationen) ab und überträgt ihn zyklisch mit dem Bakensender BSE an die die Bake passierenden Fahrzeuge. Lediglich die in Fig. 4 bei den Leitvektoren LV5 und LV6 in Klammern angeführte Einschränkung KLSA wird nicht übertragen. Wenn der Bakenrechner BAR von der benachbarten Lichtsignalanlage LSA die Information erhält, dass die Signalanlagen an den Knotenpunkten K5 $(x_5, y_5)$

und K6 $(x_6, y_6)$ in Betrieb sind, so unterbindet er die Übertragung der Anweisung «Querverkehr hat Vorfahrt» (QV). In der Bake kann ausserdem ein Uhrenbaustein BU angeordnet sein, mit dessen Hilfe der Bakenrechner BAR Anweisungen mit zeitlicher Beschränkung nur in den Zeitabschnitten ihrer Gültigkeit aussendet.

Die Fahrzeugeinrichtung FZE enthält einen Fahrzeugempfänger FE, der die Bakeninformationen empfängt und über den Bordrechner BRF zur Abspeicherung an den Bordspeicher SPF übergibt. Die Auswahl derjenigen Informationen, die vom Fahrzeug übernommen und gespeichert werden, wird dabei mit Hilfe des Zielspeichers ZSP getroffen, in welchem zu Fahrtbeginn über das Eingabegerät EG das Fahrtziel eingetastet wurde.

Der Bordrechner BRF fragt nun ständig die laufende Position des Fahrzeuges vom Navigationsgerät ANV ab, das die Positionsbestimmung mit Hilfe eines Wegimpulsgebers WG und einer Magnetfeldsonde MS errechnet. Auf diese Weise kann der Bordrechner BRF bestimmen, im Bereich welches Leitvektors LV sich das Fahrzeug gerade befindet. Dementsprechend ruft der Bordrechner BRF die gerade gültigen Warnhinweise und Einschränkungen aus dem Bordspeicher SPF ab, verknüpft sie in der oben beschriebenen Weise mit Geschwindigkeits- und Bedienfunktionen, die er vom Tachometer TAC, vom Blinker BLI und vom Zündschloss ZUE erhält, sowie mit den im Speicher VSP gespeicherten Versorgungsbedingungen (z. B. $F_1(s)$ bzw. $F_2(s)$ oder LKW) und schaltet, falls erforderlich, die Symbole der Fig. 2a bis 2h im Anzeigegerät AG ein. Weitere Informationen erhält der Bordrechner BRF von der Borduhr UHR, die zumindest in dem Fall vorgesehen sein muss, dass in den Baken der Uhrenbaustein BU fehlt und entsprechend auch zeitabhängige Vorschriften ständig in das Fahrzeug übertragen und dort gespeichert werden.

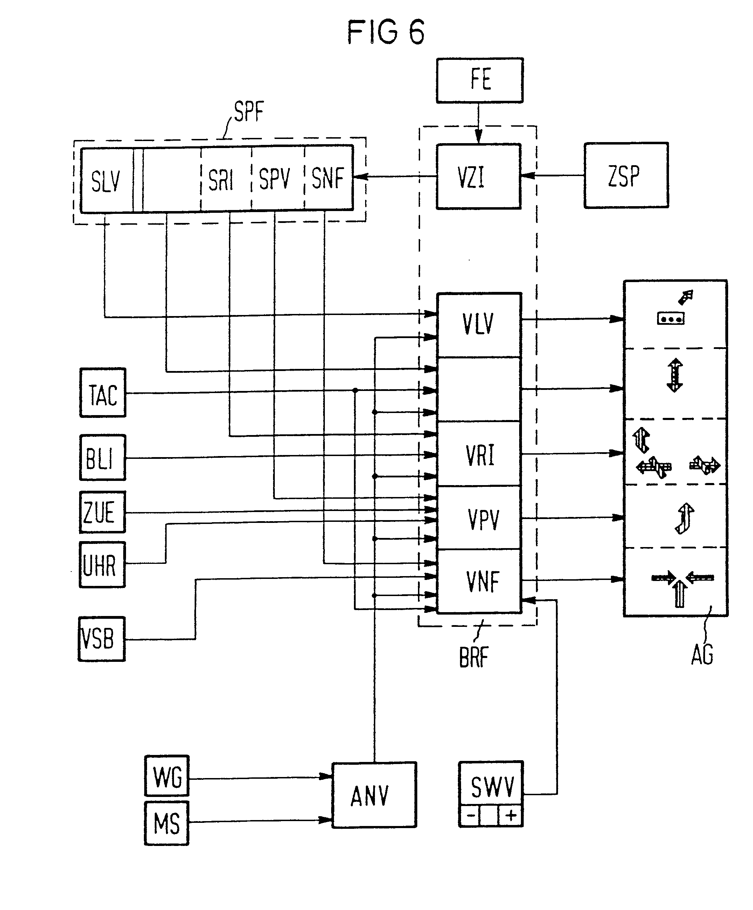

In Fig. 6 sind die Teile der Fahrzeugeinrichtung nach ihren Funktionen aufgegliedert und in ihrer gegenseitigen Verknüpfung dargestellt. So lässt sich der Bordrechner BRF des Fahrzeuges von seinen verschiedenen Funktionen her als eine Reihe von Vergleichs- und Verknüpfungseinrichtungen betrachten. Beim Passieren der Leitbaken fungiert der Bordrechner als eine Vergleichseinrichtung VZI für Zielinformationen, er wählt aus den übertragenen und vom Fahrzeugempfänger FE empfangenen Daten diejenigen aus, die den im Zielspeicher ZSP gespeicherten Zielkoordinaten zuzuordnen sind. Diese ausgewählten Daten werden im Fahrzeugspeicher SPF gespeichert, der ebenfalls als eine Zusammenfassung von Speichern für verschiedene Datengruppen aufgefasst werden kann. So dient dieser Speicher SPF in einem Teil SLV der Speicherung der Leitvektoren bzw. der diese Leitvektoren bestimmenden Koordinaten. Weiterhin dient dieser Speicher zur Speicherung verschiedener Verkehrsvorschriften, Anweisungen und Beschränkungen, die unterschiedlich mit Informationen aus dem Fahrzeug verknüpft und entsprechend zur Anzeige verschiedener Warnsymbole ausgewertet werden können. So lässt sich der Fahrzeugspeicher SPF teilweise als Speicher SRI für Richtungsvorschriften, als Speicher SPV für Parkverbotsvorschriften und als Speicher SNF für sonstige Verhaltensvorschriften begreifen.

Der Bordrechner BRF dient, wie erwähnt, in verschiedenen Funktionen als Vergleichs- und Verknüpfungseinrichtung, so beispielsweise als Vergleichseinrichtung VLV für Leitvektorkoordinaten. Dabei wird die in der Navigationseinrichtung ANV jeweils ermittelte Fahrzeugposition mit den im Speicher SLV gespeicherten Leitempfehlungen verglichen. Dieser Vergleich führt zu einer Leitempfehlung, die im Anzeigegerät AG beispielsweise in Form eines Richtungspfeiles und einer Entfernungsangabe ausgegeben wird.

Der Bordrechner BRF dient weiterhin als Vergleichseinrichtung für Vorschriften bezüglich der Fahrtrichtung, die im Speicherbereich SRI gespeichert sind. Diese Vorschriften werden mit dem Signal vom Blinkgeber BLI verglichen. Je nach Art der Vorschrift kann dann das Warnsignal «Überholen verboten», «Links abbiegen verboten» oder «Rechts abbiegen verboten» angezeigt werden.

Die Vorschriften über Parkverbote aus dem Speicherbereich SPV werden im Bordrechner BRF in seiner Funktion als Vergleichseinrichtung VPV mit dem Signal aus dem Zündschloss ZUE verglichen und verknüpft. Handelt es sich um ein nur zeitweise geltendes Verbot, so wird auch das Signal des Zeitgebers UHR mit verknüpft. Bei Abweichung von der Vorschrift wird das Warnsignal «Parken verboten» im Anzeigegerät AG angezeigt.

Die im Speicherbereich SNF gespeicherten Anweisungen werden in der Vergleichseinrichtung VNF, die ebenfalls durch den Bordrechner BRF dargestellt wird, mit den Versorgungsbedingungen im Fahrzeugspeicher VSB, gegebenenfalls unter Einbeziehung des Geschwindigkeitssignals vom Tachometer TAC, verglichen. Eine Abweichung von den Vorschriften führt dabei zur Ausgabe der Warnsignale «Vorfahrt von rechts», «Vorfahrt von links» oder «Vorfahrt beachten». Das Signal aus der Navigationseinrichtung ANV, das die jeweilige Fahrzeugposition beschreibt, wird in jedem Fall mit in die Vergleichseinrichtung einbezogen, da die Gültigkeit der jeweiligen Verkehrsvorschriften im allgemeinen ortsbezogen ist.

Die in Fig. 6 als einzelne Vergleichseinrichtungen VLV, VRI, VPV und VNV dargestellten Funktionseinheiten könnten als Einzelschaltungen mit entsprechenden logischen Verknüpfungen ausgeführt werden. Zweckmässig ist es jedoch, dass diese Funktionen alle von einem Bordrechner BRF übernommen werden, der ausserdem weitere Steuerfunktionen erfüllen kann.

Es ist zweckmässig, die Warneinrichtung den individuellen Bedürfnissen der Fahrer anzupassen. Schnell reagierende, sportliche Fahrer wollen sich nicht zu oft warnen lassen, auch wenn sie Geschwindigkeitsgebote grosszügig auslegen und schnell an vorfahrtsberechtigte Strassen heranfahren. Vorsichtige Fahrer wollen andererseits nichts riskieren und lieber zu früh als zu spät gewarnt werden. Deshalb kann die Eingabe eines Korrekturfaktors vorgesehen werden, mit dem man die Näherungsfunktionen der Versorgungsbedingungen VSB nach den persönlichen Bedürfnissen etwas nach oben oder nach unten verstellen kann. In Fig. 6 ist zu diesem Zweck eine Schwellwertverstelleinrichtung SWV vorgesehen, mit der man beispielsweise durch Tastendruck bei der Vergleichseinrichtung VNF für den Vergleich mit den Näherungsfunktionen die Vergleichswerte nach oben oder unten korrigieren kann.

## Patentansprüche

1. Verkehrsleit- und Informationssystem mit an bestimmten Stellen eines Verkehrsnetzes ortsfest angeordneten Leitbaken (LB), von denen aus an passierende Fahrzeuge (FZ) unter anderem ortsbezogene Informationen über Verkehrsvorschriften zusammen mit einer jeweils zugehörigen Ortskennzeichnung übermittelt werden, wobei in einzelnen Fahrzeugen (FZ) jeweils ein Informationsspeicher (SPF) zur Speicherung übermittelter ortsbezogener Informationen und Verkehrsvorschriften zusammen mit der zugehörigen Ortskennzeichnung, eine selbständige Navigationseinrichtung (ANV) zur ständigen Positionsermittlung des Fahrzeugs (FZ), eine Vergleichseinrichtung (VLV) zum Vergleich der gespeicherten Ortskennzeichnungen mit der jeweils ermittelten Fahrzeugposition sowie eine Anzeigeeinrichtung (AG) zur ortsgerechten Anzeige von gespeicherten Informationen über Verkehrsvorschriften bei Übereinstimmung der zugehörigen Ortskennzeichnung mit der jeweils ermittelten Fahrzeugposition vorgesehen sind, dadurch gekennzeichnet, dass in dem Fahrzeug (FZ) ein Vorschriftenspeicher (SPF) für ortsgebundenes vorschriftsmässiges Verkehrsverhalten vorgesehen ist, dass Sensoren (TAC, BLI, ZUE) zur Erfassung vorbereitender Handlungen im Fahrzeug für ein bevorstehendes Verkehrsverhalten und zur Erzeugung von entsprechenden Signalen vorgesehen sind, dass die ortsgebundenen Informationen aus dem Vorschriftenspeicher (SPF) in einer Vergleichseinrichtung (VRI, VPV) mit den Signalen der Sensoren (TAC, BLI, ZUE) verglichen werden, und dass bei Feststellung von Sensorsignalen, die einer bestimmten Vorschrift aus dem Vorschriftenspeicher (SPF) widersprechen, ein Symbol für die betreffende Vorschrift angezeigt wird.

2. Verkehrsleit- und Informationssystem nach Anspruch 1, dadurch gekennzeichnet, dass im Fahrzeug (FZ) ein Zeitgeber (UHR) vorgesehen ist, dass im Vorschriftenspeicher (SPF) zeitgebundene Verkehrsvorschriften jeweils mit ihrer Geltungszeit gespeichert sind und über eine Zeitvergleichseinrichtung (VPV) zusätzlich mit der Tageszeit verglichen werden.

3. Verkehrsleit- und Informationssystem nach Anspruch 1 oder 2, dadurch gekennzeichnet, dass ein Parkverbot enthaltende Vorschriftensignale jeweils mit einem den Zustand des Zündstromkreises (ZUE) des Fahrzeugs (FZ) repräsentierenden Signal verglichen werden, und dass bei Ausschaltung der Zündung ein Parkverbotsymbol angezeigt wird.

4. Verkehrsleit- und Informationssystem nach einem der Ansprüche 1 bis 3, dadurch gekennzeichnet, dass Vorschriftensignale für das Verbot einer bestimmten Fahrtrichtung bzw. für ein Überholverbot jeweils mit einem den Zustand des Blinkgebers (BLI) im Fahrzeug repräsentierenden Signal verglichen werden, wobei eine Einschaltung bzw. Nichteinschaltung des Blinkgebers zur Anzeige eines Richtungsverbotssignales ausgewertet wird.

5. Verkehrsleit- und Informationssystem nach einem der Ansprüche 1 bis 4, dadurch gekennzeichnet, dass vor Gefahrenpunkten ein für den Geschwindigkeitsverlauf des Fahrzeugs (FZ) repräsentatives Signal erzeugt und mit einer im Vorschriftenspeicher gespeicherten Näherungsfunktion verglichen wird, und dass bei signifikanter Überschreitung der Näherungsfunktion ein Symbol für eine Geschwindigkeitsreduzierung angezeigt wird.

6. Verkehrsleit- und Informationssystem nach Anspruch 5, dadurch gekennzeichnet, dass im Fahrzeug mehrere Näherungsfunktionen ($F_1$, $F_2$) gespeichert und entsprechend den örtlichen Gegebenheiten auswählbar sind.

7. Verkehrsleit- und Informationssystem nach einem der Ansprüche 1 bis 6, dadurch gekennzeichnet, dass in der Vergleichseinrichtung (VNF) die Schwellenwerte, bei deren Überschreitung eine Anzeige erfolgt, durch Eingabe von Korrekturfaktoren veränderbar sind.

8. Verkehrsleit- und Informationssystem nach einem der Ansprüche 1 bis 7, dadurch gekennzeichnet, dass zur Anzeige der Vorschriftensymbole im Fahrzeug (FZ) ein Anzeigefeld (1) mit wahlweise ansteuerbaren Leuchtfeldern (5) vorgesehen ist, welche jeweils in den Hauptfahrtrichtungen verlaufende Balken und zumindest teilweise an den Enden der Balken angeordnete, in entgegengesetzte Richtungen weisende Pfeilspitzen bilden.

9. Verkehrsleit- und Informationssystem nach Anspruch 8, dadurch gekennzeichnet, dass zumindest ein Teil der als Balken ausgebildeten Anzeigefelder (5) von schräg verlaufenden, ebenfalls wahlweise ansteuerbaren Querbalken gekreuzt werden.

10. Verkehrsleit- und Informationssystem nach Anspruch 9, dadurch gekennzeichnet, dass die einzelnen Balken und Pfeile des Anzeigefeldes in mindestens zwei verschiedenen Farben beleuchtbar sind.

11. Verkehrsleit- und Informationssystem nach Anspruch 9 oder 10, dadurch gekennzeichnet, dass um das kreisförmige Anzeigefeld (1) ein ringförmiges Anzeigefeld (2) zur Anzeige von Richtungspfeilen (3) für die Ausgabe von Leitwegempfehlungen vorgesehen ist.

## Claims

1. A traffic guidance and information system with guide beacons (LB) which are arranged so as to be stationary at specific points of a traffic network and from which guide beacons inter alia place-related information about traffic regulations together with a respectively assigned place indication is transmitted to passing vehicles (FZ), where in individual vehicles (FZ) are respectively arranged an information store (SPF) for storing transmitted place-related information and traffic regulations together with the assigned place indication, an independent navigation device (ANV) for constantly determining the position of the vehicle (FZ), a comparison device (VLV) for comparing the stored place indications with the respectively determined position of the vehicle, and a display device (AG) for the place-related display of stored information about traffic regulations when the assigned place indication corresponds to the respectively determined position of the vehicle, characterised in that the vehicle (FZ) is provided with a regulation store (SPF) for place-related traffic behaviour according to the regulations, that there are arranged sensors (TAC, BLI, ZUE) for detecting preparing actions in the vehicle for a forthcoming traffic behaviour and for producing corresponding signals, that the place-related information from the regulation store (SPF) is compared with the signals of the sensors (TAC, BLI, ZUE) in a comparison device (VRI, VPV), and that upon determination of sensor signals which are contradictory to a specific regulation from the regulation store (SPF), a symbol for the respective regulation is displayed.

2. A traffic guidance and information system as claimed in claim 1, characterised in that a timer (UHR) is arranged in the vehicle (FZ), that time-dependent traffic regulations are respectively stored with their valid period in the regulation store (SPF) and additionally compared with the time of the day by means of a time comparison device (VPV).

3. A traffic guidance and information system as claimed in claim 1 or 2, characterised in that regulation signals containing a parking prohibition are respectively compared with a signal which represents the state of the ignition circuit (ZUE) of the vehicle (FZ), and that a parking prohibition symbol is displayed when the ignition is switched off.

4. A traffic guidance and information system as claimed in one of the claims 1 to 3, characterised in that the regulation signals for the prohibition of a specific driving direction or for a prohibition for overtaking are respectively compared with a signal which represents the state of the blinker unit (BLI) in the vehicle, where switching-on or non-switching-on of the blinker unit is analysed to display a signal for a direction prohibition.

5. A traffic guidance and information system as claimed in one of claims 1 to 4, characterised in that before danger points a signal representative of the speed variation of the vehicle (FZ) is produced and compared with an approach function which is stored in the regulation store, and that when the approach function is significantly exceeded a symbol for a speed reduction is displayed.

6. A traffic guidance and information system as claimed in claim 5, characterised in that a plurality of approach functions ($F_1$, $F_2$) are stored in the vehicle and can be selected in accordance with the local conditions.

7. A traffic guidance and information system as claimed in one of claims 1 to 6, characterised in that in the comparison device (VNF) the threshold values, where an indication takes place when they are exceeded, can be changed by the input of correction factors.

8. A traffic guidance and information system as claimed in one of claims 1 to 7, characterised in that in order to display the regulation symbols, the vehicle (FZ) is provided with a display field (1) with alternatively controllable light-emitting fields (5) which respectively form bars extending in the main driving directions and arrow heads which are at least partially arranged at the ends of the bars and point in opposite directions.

9. A traffic guidance and information system as claimed in claim 8, characterised in that at least part of the display fields (5) designed as bars are intersected by cross-bars which extend transversely and are likewise alternatively controllable.

10. A traffic guidance and information system as claimed in claim 9, characterised in that the individual bars and arrows of the display field can be illuminated in at least two different colours.

11. A traffic guidance and information system as claimed in claim 9 or 10, characterised in that a ring-shaped display field (2) is arranged around the circular display field (1) in order to display direction arrows (3) for the issuance of route recommendations.

**Revendications**

1. Système de guidage et d'information pour la circulation, comportant des balises de guidage (LB) montées fixes en des emplacements déterminés d'un réseau de circulation et à partir desquelles notamment des informations rapportées au lieu et concernant des prescriptions de circulation ainsi qu'une identification de lieu respectivement associée, sont transmises à des véhicules (FZ) passant devant ces balises, et selon lequel il est prévu dans des véhicules individuels (FZ) respectivement une mémoire d'informations (SPF) servant à mémoriser des informations locales et des prescriptions de circulation retransmises, ainsi que l'identification associée de lieu, un dispositif automatique de navigation (ANV) servant à déterminer la position actuelle du véhicule (FZ), un dispositif comparateur (VLV) servant à comparer les identifications mémorisées de lieux avec la position respectivement déterminée du véhicule, ainsi qu'un dispositif d'affichage (AG) servant à afficher, en fonction du lieu, les informations mémorisées concernant des prescriptions de circulation, dans le cas d'une coïncidence entre l'identification associée de lieu et la position respectivement déterminée du véhicule, caractérisé par le fait qu'il est prévu dans le véhicule (FZ) une mémoire de prescriptions (SPF) pour un comportement de circulation rapporté au lieu et conforme aux prescriptions, qu'il est prévu des détecteurs (TAC, BLI, ZUE) servant à détecter des manœuvres préparatoires dans le véhicule pour un comportement de circulation à venir et pour la production de signaux correspondants, que les informations rapportées au lieu et tirées de la mémoire de prescriptions (SPF) sont comparées aux signaux des détecteurs (TAC, BLI, ZUE) dans un dispositif comparateur (VRI, VPV) et que, lors de la détermination de signaux des détecteurs, qui vont à l'encontre d'une prescription déterminée tirée de la mémoire de prescriptions (SPF), un symbole relatif à la prescription concernée est affiché.

2. Système de guidage et d'information pour la circulation suivant la revendication 1, caractérisé par le fait qu'une minuterie (UHR) est prévue dans le véhicule (FZ), que des prescriptions de circulation, rapportées à l'heure sont mémorisées, respectivement avec leur durée de validité, dans la mémoire de prescriptions (SPF) et sont comparées en outre à l'heure du jour par l'intermédiaire d'un dispositif comparateur du temps (VPV).

3. Système de guidage et d'information pour la circulation suivant la revendication 1 ou 2, caractérisé par le fait que des signaux de prescription contenant une interdiction de stationnement sont comparés respectivement à un signal représentant l'état du circuit d'allumage (ZUE) du véhicule (FZ) et que lors de l'interruption de l'allumage, un symbole d'interdiction de stationnement est affiché.

4. Système de guidage et d'information pour la circulation suivant l'une des revendications 1 à 3, caractérisé par le fait que les signaux de prescription pour l'interdiction d'un sens déterminé de déplacement ou pour l'interdiction de dépassement sont comparés respectivement à un signal représentant l'état du clignotant (BLI) dans le véhicule, auquel cas le branchement ou l'absence de branchement du clignotant est évalué en vue de l'affichage d'un signal d'interdiction de prendre cette direction.

5. Système de guidage et d'information pour la circulation, caractérisé par le fait qu'un signal représentatif de l'allure de la vitesse du véhicule (FZ) est produit en amont de points dangereux et est comparé à une fonction d'approche mémorisée dans la mémoire de prescriptions et que dans le cas d'un dépassement important de la fonction d'approche, un symbole impliquant une réduction de la vitesse est affiché.

6. Un système de guidage et d'information pour la circulation suivant la revendication 5, caractérisé par le fait que plusieurs fonctions d'approche (F₁, F₂) sont mémorisées dans le véhicule et peuvent être choisies en fonction des conditions locales.

7. Système de guidage et d'information pour la circulation suivant l'une des revendications 1 à 6, caractérisé par le fait que dans le dispositif comparateur (VNF), les valeurs de seuil, lors du dépassement desquelles un affichage se produit, peuvent être modifiée par l'introduction de facteurs correctifs.

8. Système de guidage et d'information pour la circulation suivant l'une des revendications 1 à 7, caractérisé par le fait que pour l'affichage des symboles de prescriptions dans le véhicule (FZ) il est prévu un panneau d'affichage (1) comportant des zones lumineuses (5) pouvant être commandées au choix et qui forment des traits s'étendant respectivement dans les directions principales de déplacement et des pointes de flèches disposées au moins partiellement au niveau des extrémités des traits et s'étendant dans des directions opposées.

9. Système de guidage et d'information pour la circulation suivant la revendication 8, caractérisée par le fait qu'au moins une partie des zones lumineuses (5) réalisées sous la forme de traits sont recoupées par des traits transversaux disposés obliquement et pouvant être également sélectionnées au choix.

10. Système de guidage et d'information pour le trafic suivant la revendication 9, caractérisé par le fait que les différents traits et flèches du panneau d'affichage peuvent être éclairés au moins dans deux couleurs différentes.

11. Système de guidage et d'information pour le trafic suivant la revendication 9 ou 10, caractérisé par le fait qu'un panneau d'affichage annulaire (2) servant à réaliser l'affichage de flèches de direction (3) est prévu autour du panneau circulaire d'affichage (1), pour la délivrance de recommandations d'itinéraire.

# FIG 1

FIG 2

FIG 3

# FIG 4

| LV | Übertragung i.d.KFZ | | Bedingung aus FZ | | | Warnsymbol |
|---|---|---|---|---|---|---|
| | Anweisung | Einschr. | $V_{FZ}$ | BED | VSB | |
| 1 | RVL | – | > NF 1 | | $F_1(s)$ | |
| | GV | Z3 | > NF1 | KBL | $F_1(s)\,300m$ | |
| 2 | PV | B2 | – | ZA | $16^{00}...19^{00}$ | |
| | GV | NF0 | > 50km/h | KBL | – | |
| 3 | – | – | | – | – | |
| 4 | – | – | | – | – | |
| | QV | E,NF2 | > NF2 | – | $F_2(s)\,8^{00}...18^{00}$ | |
| 5 | – | – | | – | – | |
| | QV | (KLSA) | > NF2 | – | $F_2(s)$ | |
| | LAV | – | – | BL | – | |
| 6 | – | – | | – | – | |
| | QV | KLSA | > NF2 | | $F_2(s)$ | |
| 7 | LAV | LKW | – | BL | LKW | |
| 8 | ÜV | – | – | BL | – | |
| 9 | – | – | | – | – | |

# FIG 5

| LVK1 | K x | y | Anweisungen | | | | Einschränkungen | | | | |
|------|-----|---|-----|-----|-----|-----|-----|-----|-----|-----|-----|
| LV1 | $x_1$ | $y_1$ | RVL | GV | – | – | – | Z3 | – | – | – |
| LV2 | $x_2$ | $y_2$ | PV | GV | – | – | B2 | NFO | – | – | – |
| . 5 . | . . | . . | QV | . | . | . | . | . | . | . | . |
| n | $x_n$ | $y_n$ | . . | . | . | . | . | . | . | . | . |

BSP

LB

| BAR |
|-----|

LSA

| BSE | | BU |
|-----|--|-----|

| FE | | VSB | | UHR |
|----|--|-----|--|-----|

FZE

| BRF |
|-----|

AG

| SPF | | ANV | | ZSP |
|-----|--|-----|--|-----|

EG

| WG | | MS | | TAC | BLI | ZUE |
|----|--|----|--|-----|-----|-----|

# FIG 6